# EUROPÄISCHE PATENTSCHRIFT

(11) **EP 0 572 427 B1**
(45) Veröffentlichungstag und Bekanntmachung des Hinweises auf die Patenterteilung: **23.11.1994**
(21) Anmeldenummer: 92903057.5
(22) Anmeldetag: 24.01.1992
(51) Int. Cl.: H01F 40/06

(54) **STROMWANDLER**
CURRENT TRANSFORMER
TRANSFORMATEUR D'INTENSITE

(30) Priorität: 22.02.1991 DE 4106034
(43) Veröffentlichungstag der Anmeldung: 08.12.1993
(73) Patentinhaber: SIEMENS AKTIENGESELLSCHAFT, 80333 München (DE)
(72) Erfinder: GORABLENKOW, Jörg, D-1000 Berlin 20 (DE); Dietz, Hermann, W-86 Bamberg (DE)
(86) Internationale Anmeldenummer: DE9200051
(87) Internationale Veröffentlichungsnummer: WO9215104

(56) Entgegenhaltungen:
- EP-A- 0 063 636
- CH-A- 570 685
- DE-C- 683 018

## Beschreibung

Die Erfindung bezieht sich auf einen Stromwandler zum Einbau in eine auf Erdpotential liegende, einen Hochspannungsleiter umgebende Metallkapselung mit einem Ringkern und einer den Ringkern toroidal umgebenden Sekundärwicklung.

Ein derartiger Stromwandler ist aus der EP-0 063 636 Bl bekannt. Der dort beschriebene Stromwandler wird durch ein am einen Ende mit der Kapselung elektrisch leitend verbundenes inneres Rohr und einen Abschirmkörper, der an der dem inneren Rohr abgekehrten Seite des Ringkerns mit der Kapselung leitend verbunden ist und mit dem Rohr elektrisch isoliert überlappt, vor Überspannungen an den Sekundärklemmen geschützt. Solche Überspannungen können auftreten, wenn der Hochspannungsleiter beispielsweise innerhalb einer Schaltanlage bei Zu- und Abschaltvorgängen schnellen Strom- und Spannungsänderungen ausgesetzt ist. Es laufen dann transversale elektromagnetische Wanderwellen zwischen dem Hochspannungsleiter und der Metallkapselung in Längsrichtung des Hochspannungsleiters. Auftretende Wanderwellen können über die zwischen dem inneren Rohr und dem Abschirmkörper durch die Überlappung gebildete, relativ große Kapazität praktisch ungehindert ohne Reflexion weiterlaufen, ohne eine wesentliche Potentialerhöhung der Sekundärwicklung hervorzurufen.

Der vorliegenden Erfindung liegt die Aufgabe zugrunde, einen Stromwandler der eingangs genannten Art mittels konstruktiv einfacher Maßnahmen vor Überspannungen an der Sekundärwicklung infolge von Schaltvorgängen zu schützen.

Die Aufgabe wird erfindungsgemäß dadurch gelöst, daß auf wenigstens einen Teil des Ringkerns eine weitere Wicklung aufgebracht ist, die mit einem Ende mit dem Erdpotential leitend verbunden ist.

Die elektrische Kapazität zwischen der Sekundärwicklung und der geerdeten weiteren Wicklung liegt schaltungstechnisch parallel zu der Streukapazität zwischen der Sekundärwicklung und der auf Erdpotential liegenden Metallkapselung. Dadurch wird die Gesamtkapazität der Sekundärwicklung gegen die Metallkapselung vergrößert.

Im allgemeinen stellt die Kapazität zwischen dem Hochspannungsleiter und der Sekundärwicklung des Stromwandlers zusammen mit der Kapazität der Sekundärwicklung gegenüber der geerdeten Metallkapselung einen kapazitiven Spannungsteiler dar, dessen Unterspannungskondensator durch die Sekundärwicklung und die Metallkapselung gebildet ist. Durch eine Vergrößerung der Kapazität dieses Unterspannungskondensators mittels der geerdeten weiteren Wicklung wird gemäß der Erfindung die Sekundärwicklung beim Auftreten von Wanderwellen an dem Hochspannungsleiter auf einem niedrigen Spannungsniveau gehalten. Dadurch wird auch bei an dem Hochspannungsleiter auftretenden schnellen Strom- und Spannungsänderungen eine Überspannung an der Sekundärwicklung vermieden.

Die weitere Wicklung kann so ausgebildet werden, daß sie den gesamten Ringkern oder wenigstens wesentliche Teile des Ringkerns überdeckt. In diesem Fall sind aber die Teile der weiteren Wicklung, die von dem geerdeten Ende am weitesten entfernt sind, im Hinblick auf hochfrequente Spannungsänderungen im wesentlichen über die Eigeninduktivität der Wicklung selbst mit dem Erdpotential verbunden. Bei hochfreqenten Spannungsänderungen trägt der Anteil der Kapazität dieser von dem geerdeten Ende entfernten Wicklungsteile zur Sekundärwicklung nur zum Teil zur Gesamtkapazität bei.

Es erweist sich in diesem Zusammenhang als vortelhaft, daß zusätzliche Wicklungen auf jeweils einem Teil des Ringkerns aufgebracht und mit jeweils einem Ende leitend mit dem Erdpotential verbunden sind.

Dadurch, daß zusätzliche Wicklungen auf den Ringkern aufgebracht sind, ist die Kapazität zwischen der Sekundärwicklung und der auf Erdpotential liegenden Metallkapselung vergrößert. Somit werden die bei schnellen Spannungsänderungen auf dem Hochspannungsleiter auftretenden Spannungserhöhungen an der Sekundärwicklung gering gehalten. Das Aufbringen mehrerer zusätzlicher Wicklungen auf den Ringkern hat den Vorteil, daß jede der zusätzlichen Wicklungen mit dem Erdpotential auf direktem Wege leitend verbunden werden kann, wobei die direkte leitende Verbindung zum Erdpotential eine geringe Eigeninduktivität aufweist. Dadurch ist auch bei hohen Frequenzen eine wirksame Verbindung zwischen den zusätzlichen Wicklungen und dem Erdpotential gegeben.

Eine weitere vorteilhafte Ausgestaltung der Erfindung sieht vor, daß die weitere Wicklung und die zusätzlichen Wicklungen die Sekundärwicklung umgeben.

Durch diese Anordnung der weiteren Wicklung und der zusätzlichen Wicklungen ist eine Abschirmung der Sekundärwicklung von dem den Hochspannungsleiter umgebenden elektrischen Feld gegeben. Dadurch können die Einflüsse des elektrischen Feldes auf die Sekundärwicklung besonders gering gehalten werden.

Die Erfindung wird weiterhin dadurch vorteilhaft ausgestaltet, daß der Ringkern an einer Stelle mit dem Erdpotential leitend verbunden ist.

Dadurch wird die Kapazität zwischen der Sekundärwicklung und dem Ringkern schaltungstechnisch zu der Kapazität zwischen der Sekundärwicklung und der Metallkapselung parallelgeschaltet. Dies führt zu einer Erhöhung der Gesamtkapazität zwischen der Sekundärwicklung und der Metallkapselung.

Im folgenden wird die Erfindung anhand eines Ausführungsbeispiels in einer Zeichnung gezeigt und anschließend beschrieben.

Dabei zeigt
- Figur 1: eine Metallkapselung mit einem Stromwandler und einem Hochspannungsleiter schematisch im Längsschnitt,
- Figur 2: einen Halbschnitt durch den Stromwandler mit einer schematischen Darstellung der Sekundärwicklung und der weiteren Wicklung,
- Figur 3: den Ringkern eines erfindungsgemäßen Stromwandlers mit mehreren zusätzlichen Windungen.

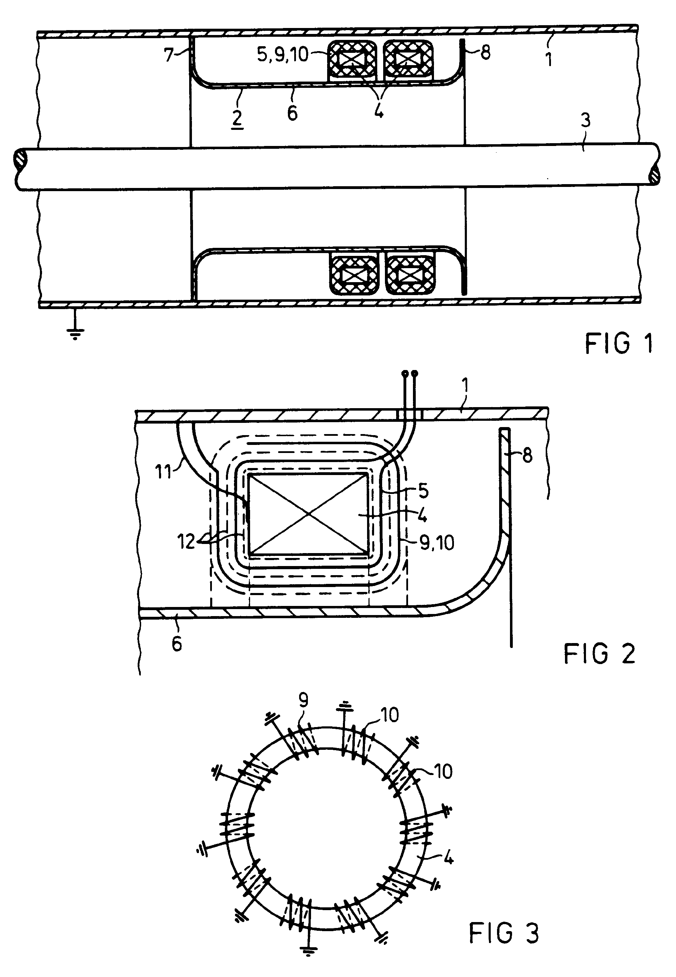

Figur 1 zeigt schematisch die Metallkapselung 1, in die ein Stromwandler 2 eingesetzt ist, der einen Hochspannungsleiter 3 umgibt. Der Stromwandler 2 besteht aus mehreren Ringkernen 4, auf denen wenigstens eine Sekundärwicklung 5 aufgebracht ist, die zur Messung des in dem Hochspannungsleiter 3 fließenden Stromes mit einer nicht dargestellten elektronischen Meßanordnung verbunden ist. Die Sekundärwicklung 5 ist auf die Ringkerne 4 jeweils isoliert aufgebracht.

Die Ringkerne 4 sind gegenüber dem Hochspannungsleiter 3 durch eine Elektrode 6 abgeschirmt. Die Elektrode 6 ist an einem Ende 7 mit der Metallkapselung 1 elektrisch leitend verbunden. Das andere Ende 8 der Elektrode 6 darf mit der Metallkapselung 1 nicht leitend verbunden werden, da sonst eine Kurzschlußleiterschleife um die Ringkerne 4 herum geschaffen würde, die den Stromwandler 2 zur Messung eines in dem Hochspannungsleiter 3 fließenden Stromes unbrauchbar machen würde.

Schnelle Spannungs- und Stromerhöhungen, die an dem Hochspannungsleiter 3 auftreten, laufen entlang des Hochspannungsleiters 3 zwischen diesem und der Metallkapselung 1 als elektromagnetische Wanderwellen. Solche Wanderwellen durchsetzen auch den durch die Elektrode 6 abgetrennten Raum der Metallkapselung 1, in dem sich die Ringkerne 4 befinden.

Im allgemeinen kann eine solche Wanderwelle in der Sekundärwicklung 5 des Stromwandlers 2 eine Überspannung erzeugen, durch die die an die Sekundärwicklung 5 angeschlossene Meßapparatur beschädigt werden kann. Zur Verhinderung des Auftretens solcher Überspannungen sind gemäß der Erfindung auf jeden Ringkern 4 zusätzlich zu der Sekundärwicklung 5 eine weitere Wicklung 9 und mehrere zusätzliche Wicklungen 10 zur Abschirmung der Sekundärwicklung 5 aufgebracht, wie Figur 2 zeigt. Die weitere Wicklung 9 und die zusätzlichen Wicklungen 10 sind jeweils an einem Ende geerdet und gegeneinander sowie gegen die Sekundärwicklung 5 durch isolierende Schichten 12 isoliert. Zwischen der Sekundärwicklung 5 und den übrigen Wicklungen 9, 10 ergibt sich eine hohe elektrische Kapazität. Diese Kapazität ist der Streukapazität zwischen der Sekundärwicklung 5 und der Metallkapselung 1 elektrisch parallelgeschaltet.

Zusätzlich können noch die Ringkerne 4 selbst jeweils an einer Stelle über eine elektrisch leitende Verbindung 11 mit dem Erdpotential verbunden sein. Dadurch wird auch die Kapazität zwischen der Sekundärwicklung 5 und jedem der Ringkerne 4 zu der Streukapazität zwischen der Sekundärwicklung und der Metallkapselung 1 parallelgeschaltet.

Figur 3 zeigt in einer perspektivischen Ansicht einen Ringkern 4 mit einer weiteren Wicklung 9 und zusätzlichen Wicklungen 10, die am Umfang des Ringkernes 4 verteilt sind. Jede der genannten Wicklungen 9, 10 ist an einem Ende mit dem Erdpotential verbunden. Das andere Ende der Wicklungen bleibt jeweils unverbunden und ist zur Vermeidung von Spitzenentladungen zusätzlich isoliert. Die Sekundärwicklung ist in der Figur 3 aus Vereinfachungsgründen nicht dargestellt.

## Patentansprüche

1. Stromwandler zum Einbau in eine auf Erdpotential liegende, einen Hochspannungsleiter umgebende Metallkapselung mit einem Ringkern und einer den Ringkern toroidal umgebenden Sekundärwicklung,
**dadurch gekennzeichnet**, daß auf wenigstens einem Teil des Ringkerns (4) eine weitere Wicklung (9) aufgebracht ist, die mit einem Ende mit dem Erdpotential leitend verbunden ist.

2. Stromwandler nach Anspruch 1, **dadurch gekennzeichnet**, daß zusätzliche Wicklungen (10) auf jeweils einem Teil des Ringkerns (4) aufgebracht und mit jeweils einem Ende leitend mit dem Erdpotential verbunden sind.

3. Stromwandler nach Anspruch 1 oder 2, **dadurch gekennzeichnet**, daß die weitere Wicklung (9) und die zusätzlichen Wicklungen (10) die Sekundärwicklung (5) umgeben.

4. Stromwandler nach Anspruch 1 oder einem der vorhergehenden, **dadurch gekennzeichnet**, daß der Ringkern (4) an einer Stelle mit dem Erdpotential leitend verbunden ist.

## Claims

1. A current transformer for installation into a metal enclosure, which lies on earth potential, and which surrounds a high voltage conductor, said current conductor having an annular core and a secondary winding, which toroidally surrounds the annular core, characterized in that on at least one part of the annular core (4), a further winding (9) is mounted, which is conductively connected with one end, with the earth potential.

2. A current transformer according to claim 1, characterized in that additional windings (10) are each mounted on one part of the annular core (4) and are each conductively connected with one end, with the earth potential.

3. A current transformer according to claim 1 or 2, characterized in that the further winding (9) and the additional windings (10), surround the secondary winding (5).

4. A current transformer according to claim 1 or one of the preceding claims, characterized in that the annular core (4) is conductively connected at one place, with the earth potential.

## Revendications

1. Transformateur d'intensité destiné à être monté dans un capot métallique placé au potentiel de terre et entourant un conducteur à haute tension et comportant un noyau annulaire et un enroulement secondaire entourant avec une forme toroïdale le noyau annulaire, caractérisé par le fait que sur au moins une partie du noyau annulaire (4) est monté un autre enroulement (9), dont une extrémité est reliée de façon électriquement conductrice au potentiel de terre.

2. Transformateur d'intensité suivant la revendication 1, caractérisé par le fait que des enroulements supplémentaires (10) sont disposés sur respectivement une partie du noyau annulaire (4) et sont reliés, de façon électriquement conductrice, respectivement par une extrémité, au potentiel de terre.

3. Transformateur d'intensité suivant la revendication 1 ou 2, caractérisé par le fait que l'autre enroulement (9) et les enroulements supplémentaires (10) entourent l'enroulement secondaire (5).

4. Transformateur d'intensité suivant la revendication 1 ou l'une des revendications précédentes, caractérisé par le fait que le noyau annulaire (4) est relié d'une manière électriquement conductrice, en un emplacement, au potentiel de terre.
